Europäisches Patentamt

(19) European Patent Office

Office européen des brevets

(11) Publication number: **0 234 730 B1**

## EUROPEAN PATENT SPECIFICATION

(45) Date of publication of patent specification: **08.07.92**   (51) Int. Cl.⁵: **H04B  10/14**

(21) Application number: **87300587.0**

(22) Date of filing: **23.01.87**

(54) Multiplex transmission of analog signals by fiber optic channel.

(30) Priority: **11.02.86 US 538590**

(43) Date of publication of application:
**02.09.87 Bulletin  87/36**

(45) Publication of the grant of the patent:
**08.07.92 Bulletin  92/28**

(84) Designated Contracting States:
**FR GB IT**

(56) References cited:
**AU-B- 525 304
DE-A- 3 010 802
US-A- 4 061 577**

**CONFERENCE RECORD OF THE 1978 INTER-
NATIONAL CONFERENCE ON COMMUNICA-
TIONS, Toronto, 4th-7th June 1978, vol. 1 of
3, pages 14.4.1 - 14.4.3, IEEE, New York, US;
S. TAKENCHI et al.: "System application of
optical fiber video transmitter and receiver"**

(73) Proprietor: **MVS Incorporated
50 Clover Road
Trumbull, Connecticut 06611(US)**

(72) Inventor: **Bodell, Donald H.
50 Clover Hill Road
Trumbull Connecticut 06611(US)**

(74) Representative: **Abbie, Andrew Kenneth et al
R.G.C. Jenkins & Co. 26 Caxton Street
London SW1H 0RJ(GB)**

## Description

The present invention relates to apparatus for the transmission of multiplexed analog signals from a first point to a second point where they are received and demultiplexed, the transmission from the first point to the second point being by way of an optical fiber cable.

In telephone systems, it is the practice to transmit multiplexed, amplitude modulated signals from a first station, or node, to a second station, or node, by means of wires, coaxial conductor cables or radiated electromagnetic energy at microwave frequencies. Such signals include voice signals, switching signals, data signals and video signals, and the stations may include switching equipment. However, wires and coaxial cable systems have a relatively limited frequency range and distance transmission capacity, and the frequency range available for radiated electromagnetic energy systems is limited by government regulations. Therefore, the capacity of such systems is rapidly being reached if not already reached.

In a typical station for transmitting analog signals, the voice and other signals are superimposed on different carrier frequencies by amplitude modulation to form a group of amplitude modulated carriers, e.g. 12 amplitude modulated carriers. Five of such groups are combined into a super group and then, ten of such super groups are combined in a master group, in a known manner, to provide 170 amplitude modulated carriers which carry 600 channels of signal information. Such carriers may be either transmitted to another station without further modification or may be combined with similarly modulated carriers and used to amplitude modulate another carrier at a much higher frequency, e.g. the output of a microwave radio transmitter.

In a typical receiving station, the reverse processing of the carriers is carried out. In other words, the amplitude modulated carriers are demultiplexed which results in 600 channels of analog signals. If the receiving station has been converted to a digital signal responsive station, the analog signals are converted to digital signals and are subsequently processed in a conventional manner.

Telephone companies are gradually converting such analog stations and telephone exchanges to digital operation in order to obtain the advantages thereof. However, such conversions are relatively expensive, and there still are many analog signal stations which transmit to and receive from other stations which process analog signals or digital signals. It is expected that it will take several years before all stations will transmit and receive digital signals, and in the meantime, it is highly desirable to increase the transmission capacity between an analog signal transmitting station and other stations without increasing the number of lines, cables or radio links therebetween which can be useless at a later date.

The advantages of an optical fiber cable as a transmission medium are well known in the art, and they include large signal transmission capacity for a small size, freedom from electromagnetic interference, and lack of electromagnetic radiation. This latter feature eliminates the need for restricting the band width of the transmitted signals to the relatively narrow band width set forth for radio transmissions by government regulations and permits the use of wide band frequency modulation to improve the signal-to-noise ratio at the receiving end. It is known in the art to transmit digital signals from one point to another by optical fiber cables.

DE-A-3 010 802 describes a number of communication systems in which a plurality of channels is transmitted over a common light waveguide transmission path. In one such arrangement, two signals to be transmitted are each delivered to a respective modulator which amplitude modulates a subcarrier, and the outputs of the modulators are combined by a frequency division multiplexer or a time division multiplexer. The combined signal is then supplied to an electrical-optical converter for transmission along the light waveguide path.

Aspects of the present invention are set out in the accompanying claims. A preferred embodiment of the invention increases the signal transmission capacity between a first station having analog signal processing equipment and second station without a substantial modification of the analog signal processing equipment, by means of the installation of equipment which can be utilised after the analog processing equipment in the first station has been modified or replaced so as to provide digital signals for transmission from the first station to another station.

In accordance with the preferred embodiment of the invention, a master group of amplitude modulated carriers are supplied to a frequency modulator which supplies an output signal modulated in frequency in accordance with the amplitudes of the carriers. The output of the frequency modulator or the frequency modulations of a plurality of master groups is supplied to an analog optical transmitter to modulate in intensity the output of a laser optical source, the output of the optical source being transmitted over an optical fiber cable extending to a receiving station having an optical receiver. The frequency modulated signals received by the optical receiver are demodulated and the resulting analog signals are processed in a conventional manner at the receiving station. It will be noted that with the system of the invention, it is necessary to add only an optical fiber transmitter, an optical fiber receiver, a frequency modulator, a frequency demodulator and an optical fiber cable to the typical analog systems described hereinbefore to obtain the advantages of optical fiber transmission between stations, and the optical fiber cable remains useful whenever an analog system is converted to a digital system.

The preferred embodiment of the invention also includes preemphasis means between the master group signal source and the frequency modulator for reducing the magnitude of harmonics and improving the signal-to-noise ratio. Also, a pilot carrier signal is transmitted over the optical fiber cable for monitoring, adjustment and alarm purposes.

Preferred embodiments of the present invention will be explained in the following detailed description, which description should be considered in conjunction with the accompanying drawings in which:

Fig. 1 is a block diagram of the basic system of the invention for transmitting signals from a first station to a second station;

Figs. 2 and 3 are schematic block diagrams illustrating, respectively, one type of an optical receiver and one type of optical transmitter which may be employed in the system of the invention;

Fig. 4 is a block diagram of the system of the invention for transmitting signals in both directions between a pair of stations and for monitoring the conditions at one of the stations from the other station in the event that said one station is unmanned; and

Fig. 5 is a preemphasis-deemphasis graph illustrating the manner in which the master group signals may be altered for improving signal-to-noise ratio at the receiving station.

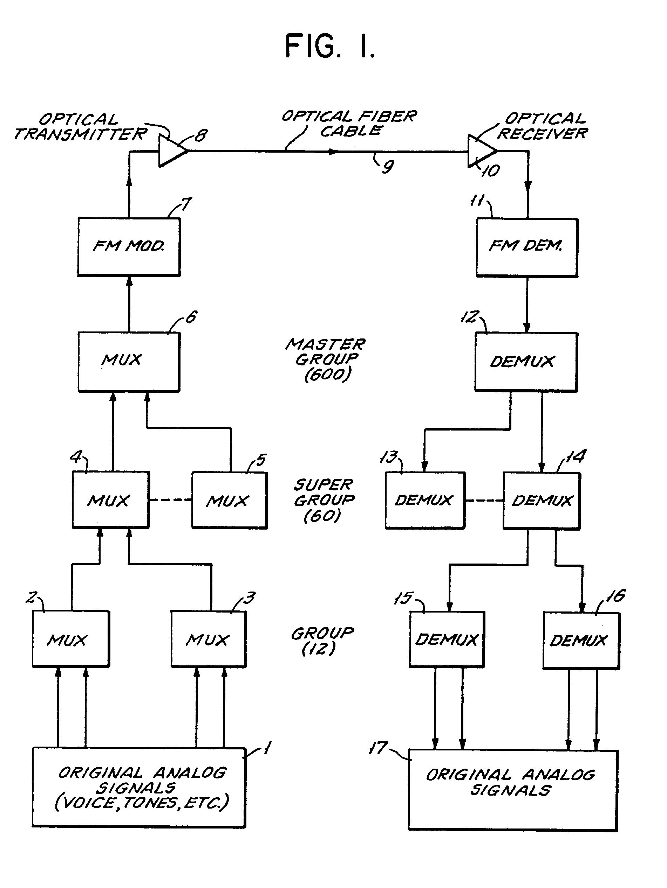

Fig. 1 is a block diagram of the combination of the apparatus of the invention with apparatus already existing in a typical telephone station. The already existing apparatus includes at the transmitting end a plurality of sources of analog signals, represented by the block 1, which may include voice signals, tone signals, data signals, etc. For example, the block 1 may include five groups of twelve voice signal channels, each voice channel having a signal frequency range of the order of 300 to 4300 Hz.

By five conventional group multiplexing means (MUX), only two of which, designated by the reference numerals 2 and 3, are shown in Fig. 1; the voice channels are converted into amplitude modulated signals in five different, higher frequency ranges to provide, at their outputs carrier signals amplitude modulated by 60 voice channels.

By ten further conventional super group multiplexing means, only two of which, designated by the reference numerals 4 and 5, are shown in Fig. 1, the signals from the first group of multiplexers are further multiplexed to provide amplitude modulated carrier signals modulated by 600 voice channels.

By a conventional master group multiplexer 6, the outputs of the super group multiplexers, e.g. the super group comprising multiplexers 4 and 5, are further multiplexed to provide 170 amplitude modulated carriers which carry 600 channels of signal information.

Commencing at the super group level, it has been the practice to include pilot carriers for monitoring purposes, e.g. to indicate whether a multiplexer is not functioning or no modulating signals are being processed.

It has been the prior art practice to supply the output of the master group multiplexer 6 to wire or coaxial conductor lines for transmission to another station or to supply the output of the master group multiplexer to a microwave transmitter for modulating the output thereof. The disadvantages of such methods of transmission have been described hereinbefore.

In accordance with the invention, a group of amplitude modulated and multiplexed carriers are supplied to a frequency modulator 7, the output of which is employed to intensity modulate the output of an optical transmitter 8 coupled to one end of a single mode optical fiber of an optical fiber cable 9 which contains a plurality of optical fibers. The opposite end of the optical fiber is coupled to an optical receiver 10, the output of which is supplied to a frequency demodulator 11 for converting frequency modulated signals at the output of the optical receiver 10 into amplitude modulated signals.

The group of amplitude modulated and multiplexed carriers may be supplied to the frequency modulator 7 from the master group multiplexer 6, as shown in Fig. 1, or may be supplied thereto from one or more of the other multiplexers or a combination of multiplexers provided, in the latter case, that the frequency ranges do not overlap. Also, more than one frequency modulator, similarly supplied with a group or groups of amplitude modulated and multiplexed carriers, may be connected to the optical transmitter provided that the outputs of the frequency modulators are separated in a known manner, e.g. by frequency. A typical nominal frequency for the output of the frequency modulator 7 may be 300 MHz.

The amplitude modulated carriers at the output of the FM demodulator 11 are supplied to a chain of demultiplexers which correspond to the multiplexers described but which function in a reverse manner. A typical station has a master group demultiplexer (DEMUX) 12, a group of super group demultiplexers, of which demultiplexers 13 and 14 are representative, and a group of group demultiplexers, of which demultiplexers 15 and 16 are representative. The analog signals at the outputs of group demultiplexers correspond to the voice and other signals supplied by the source 1 and are supplied to the recipients by conventional means represented by the block 17.

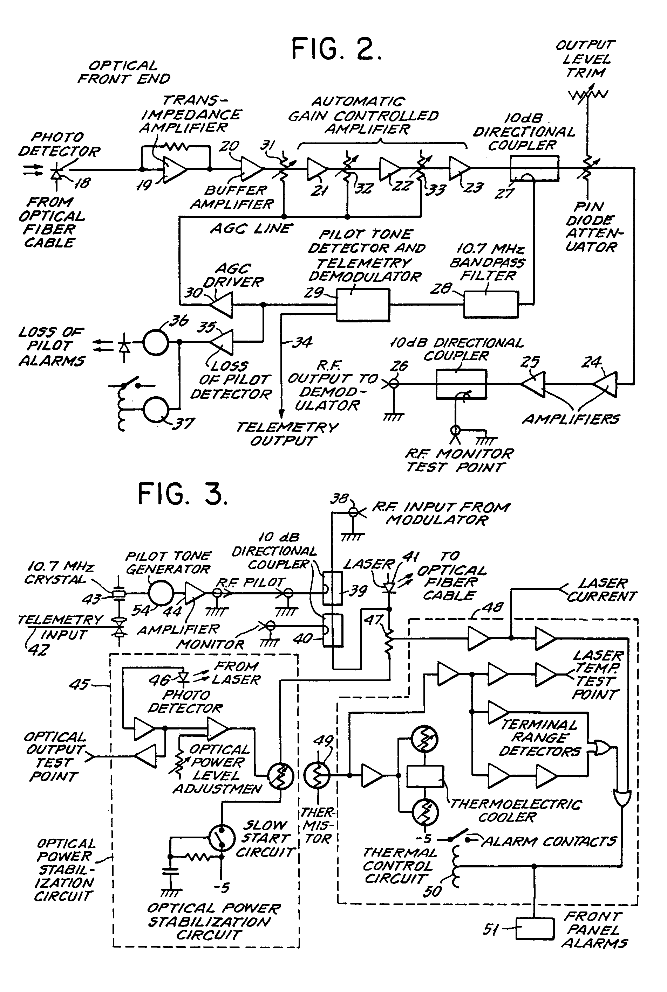

The optical transmitter 8 and the optical receiver 10 are known in the art and may, for example, be, respectively, a T1302 optical transmitter and an R1302 optical receiver manufactured and sold by Pirelli Optronic Systems, 300 Research Parkway, Meridan, Connecticut 06450. Block and functional diagrams of such a receiver and such a transmitter are shown in Figs. 2 and 3 respectively.

As illustrated in Fig. 2, a photo detector 18 receives laser light, modulated in intensity, from an optical fiber in the cable 9, and the electrical output of the photo detector is processed through amplifiers 19-25 and supplied, after processing, to the output terminal 26 which is connected to the FM demodulator 11. The output of the amplifier 23 passes through a directional coupler 27 from which pilot tone and telemetry signal energy is abstracted and supplied to a band pass filter 28. The output of the filter 28 is supplied to a pilot tone detector and telemetry signal demodulator 29. Pilot tone signal information of the detector-demodulator 29 is supplied to an automatic gain control driver 30 which, as indicated schematically by the variable resistors 31, 32 and 33, controls the gain through the amplifiers 21-23 in accordance with the amplitude of the pilot tone signal. Telemetry signals of the detector-demodulator 29 are supplied to various control devices by way of the line 34 for purposes which will be discussed hereinafter.

A loss of pilot detector 35 is connected to the detector-demodulator 29 and is connected to devices 36 and 37 for indicating reception and lack of reception of the pilot tone signal.

As shown in Fig. 3, the optical transmitter comprises an input terminal 38 to which the output of the FM modulator 7 (Fig. 1) is connected. The signal energy received at the terminal 38 passes through a pair of directional couplers 39 and 40 and is applied to a laser 41 to modulate its output in intensity. The output of the laser 41 is supplied to an optical fiber in the optical fiber cable 9 (Fig. 1).

Telemetry signals from conventional sources are supplied by way of a line 42 for the modulation of the output of an oscillator, the oscillator being represented by a crystal 43, and such oscillator output with the output of a radio frequency, tone modulated carrier generator 54 are supplied to the directional coupler 39 through an amplifier 44. Thus, the oscillator output and the pilot tone carrier are also supplied to the laser 41 and modulate its output.

The directional coupler 40 permits the withdrawal of a small amount of signal energy for monitoring purposes.

A circuit for measuring and controlling the power output of the laser 41 is diagramatically shown in the dotted rectangle 45 and includes a photo detector 46 for receiving laser energy from the laser 41 and conventional automatic and manual controls for adjusting the output level of the laser 41.

The electrical current of the laser 41 is indicated at a resistor 47 which is connected to a laser temperature control circuit diagramatically shown in the dotted rectangle 48. A thermistor 49, at the laser 41 provides information as to the temperature of the laser 41 to the temperature control circuit 48 which automatically controls the temperature of the laser 41, in a known manner, and operates alarm devices 50 and 51 in the event that the temperature of the laser 41 exceeds a safe temperature.

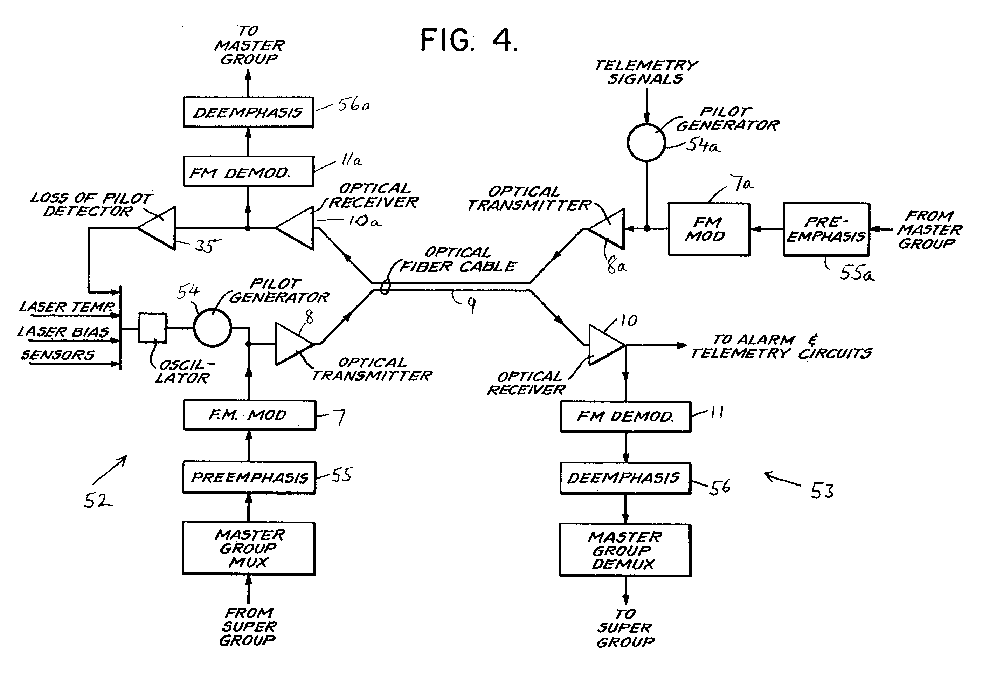

Fig. 1 illustrates a basic, one-way transmission system, and Fig. 4 illustrates a two-way transmission system for two stations 52 and 53. Fig. 4 illustrates an embodiment in which the station 53 is manned and the station 52 is unmanned, but it will be apparent that both stations could be manned. Like components are designated by the same reference numeral, the duplicate component having a suffix letter after the reference numeral.

Transmission of signals from the station 53 to the station 52 is accomplished by the optical transmitter 8a connected to an FM modulator 7a, a pilot tone carrier generator 54a and an optical fiber of the cable 9. The signals from the transmitter 8a are received by the optical receiver 10a and supplied to an FM demodulator 11a and the loss of pilot detector 35 as explained in connection with Fig. 2.

Transmission of signals from the station 52 to the station 53 is accomplished by the optical transmitter 8 connected to the FM modulator 7, the pilot tone carrier generator 54 and an optical fiber of the cable 9. The signals from the transmitter 8 are received by the optical receiver 10 and supplied to the FM demodulator 11 and to the alarm and telemetry circuits as explained in connection with Fig. 2.

In the event that the station 52 is unmanned, it is desirable to transmit information as to conditions at the station 52 to the manned station 53. Therefore, as indicated schematically in Fig. 4, signals indicating conditions at the station 52, such as loss of pilot, laser temperature, laser bias and other conditions indicated by sensors, e.g. fire sensors,unauthorized entry sensors, etc., are also supplied to the optical transmitter 8 for transmission to the optical receiver 10 which supplies the signals to alarm and telemetry circuits of the type described in connection with Fig. 2. In this way, the conditions at the unmanned station 52 can be monitored at the manned station 53.

As pointed out hereinbefore, the amplitude modulated signals at the output of the master group multiplexer 6 are not employed to directly modulate the output of the optical transmitter 8 or 8a. Instead, the amplitude modulated signals are converted, after the multiplexing, into frequency modulated signals and the latter signals are employed to modulate the output of the optical transmitter. The purpose of such conversion, which is an added step, is to improve the quality of signal transmission and reception. Thus, with frequency modulation and demodulation, the signal-to-noise ratio at the receiving end can be significantly improved, particularly since wide frequency modulation or deviation can be employed at the optical transmitter due to the use of an optical fiber to interconnect the stations. Frequency modulation to such an extent cannot be used in systems employing wire, coaxial conductor or microwave links for the reasons stated hereinbefore.

As a further means for improving the quality of signal transmission, a preemphasizer 55 and 55a may be included intermediate the source of amplitude modulated, multiplexed signals, such as the master group multiplexer 6, and the FM modulator 7 and 7a for emphasizing certain frequencies and thereby improving the power transmitted at such frequencies and hence, the signal-to-noise ratio. Of course, when such a preemphasizer, 55 and 55a, is used, the signals are subjected to deemphasis at the receiving end, such as by the deemphasizers 56 and 56a.

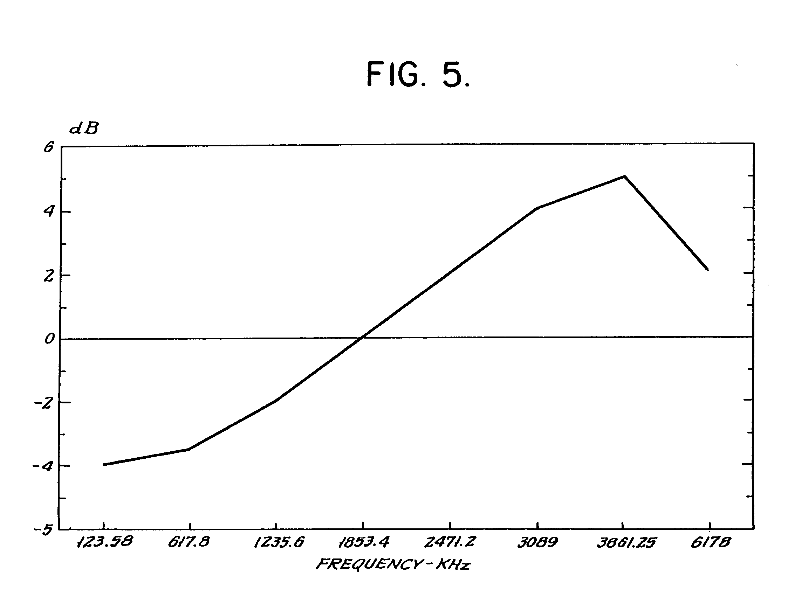

A typical preemphasis graph for the frequency range from 123.56KHz to 6178 KHz is illustrated in Fig. 5. The deemphasis graph would be the inverse of what is shown in Fig. 5.

As indicated in Fig. 5, the signals at frequencies from 1853.4 KHz to 3861.25 KHz are emphasized as compared to lower frequencies, the multiplexed carriers bearing the desired signals being in the range from 123.56 to 3861.25 KHz. However, the signals at frequencies above 3861.25 KHz are attenuated with respect to the signals at 3861.25 KHz so as to attenuate noise signals and undesired harmonics.

## Claims

1. A multiplex transmission system comprising:
   a plurality of sources (1) of analog signals connected to multiplexing means (2 to 6) for providing at least one group of amplitude modulated continuous signals at different frequencies;
   an optical transmitter (8) for producing an intensity modulated optical signal output in response to signals applied thereto;
   an optical fiber cable (9) connected at one end to said optical transmitter (8) for transmitting the optical signals at the output of said optical transmitter (8); and
   an optical receiver (10) connected to said optical fiber cable (9) for receiving optical signals from said optical transmitter (8);
   the system being characterised by:
   a frequency modulator (7) connected to said multiplexing means (2 to 6) for converting said group of amplitude modulated continuous signals into a group of frequency modulated continuous signals before supplying the signals to the optical transmitter (8) for producing the intensity modulation of said optical signal output; and
   a frequency demodulator (11) connected to said optical receiver (10) for demodulating the signals at the output of said optical receiver (10).

2. A system as claimed in claim 1 wherein said multiplexing means (2 to 6) comprises a plurality of multiplexers (2,3), each of said plurality of multiplexers (2,3) being connected to a plurality of sources (1) of analog signals, wherein said plurality of multiplexers (2,3) is connected to a further multiplexing means (6) and wherein said frequency modulator (7) is connected to said further multiplexing means (6).

3. A system as claimed in claim 1 or 2, further comprising demultiplexing means (12) connected to said frequency demodulator (11) for demultiplexing the signals at the output of said frequency demodulator (11) and converting the latter signals to said analog signals.

4. A system as claimed in claim 1, 2, or 3, further comprising a preemphasizer (55) connecting said frequency modulator (7) to said multiplexing means (2 to 6) for emphasizing some of said amplitude modulated signals relative to others of said amplitude modulated signals and a deemphasizer (56) connected to the output of said frequency demodulator (11) for deemphasizing said some of said amplitude modulated signals.

5. A system as claimed in claim 1, further comprising:
   a further plurality of sources of analog signals connected to further multiplexing means for providing a further group of amplitude modulated continuous signals at different frequencies;

a further frequency modulator (7a) disposed at the location of said optical receiver (10) and connected to said further multiplexing means for converting said further group of amplitude modulated continous signals into a further group of frequency modulated continuous signals;

a further optical transmitter (8a) disposed at the location of said further frequency modulator (7a) and connected to said further frequency modulator for intensity modulation of the optical signal output of said further optical transmitter by said further group of frequency modulated continuous signals,

said optical fiber cable (9) being connected at one end to said further optical transmitter (8a) for transmitting the optical signals at the output of said further optical transmitter;

a further optical receiver (10a) disposed at the location of the first-mentioned said optical transmitter (8) and connected to said optical fiber cable (9) for receiving optical signals from said further optical transmitter (8a); and

a further frequency demodulator (11a) connected to said further optical receiver (10a) for demodulating the signals at the output of said further optical receiver.

6. A system as claimed in claim 5, further comprising generating means (54a) for generating a pilot tone modulated carrier, means connecting said generating means (54a) to said further optical transmitter (8a) for modulating the optical signal output of said further optical transmitter (8a) by said carrier, detecting means (35) connected to said further optical receiver (10a) for indicating the presence and the absence at said further optical receiver (10a) of said pilot tone modulated carrier, and monitoring signal means responsive to said detecting means (35) for providing a monitoring signal and connected to the first-mentioned said optical transmitter (8) for modulating the output of the first-mentioned said optical transmitter (8) with said monitoring signal.

7. A system as claimed in claim 6, comprising condition measuring sensors disposed at the location of the first-mentioned said optical transmitter (8) for measuring conditions at the last-mentioned said location and means connected to said sensors and the first-mentioned said optical transmitter (8) for modulating the output of the first-mentioned said optical transmitter (8) in accordance with the conditions measured by said sensors.

8. A communication system in which analog signals are transmitted from a first station to a second station over an optical fiber cable (9), said first station (52) comprising a plurality of sources (1) of analog signals connected to multiplexing means (2 to 6) for providing at least one group of amplitude modulated continuous signals at different frequencies, and an optical transmitter (8) connected to one portion of said optical fiber cable (9) for supplying the signals at the output of said optical transmitter (8) to said one portion of said optical fiber cable (9), and said second station (53) comprising an optical receiver (10) connected to another portion of said optical fiber cable (9) for receiving optical signals from said optical transmitter (8) and demultiplexing means (12) for demultiplexing signals received by said optical receiver (10), said system being characterised in that it is a telephone system in which the plurality of sources of analog signals include voice signals and/or tone signals and which further comprises:

a frequency modulator (7) at said first station connected to said multiplexing means (2 to 6) for converting said group of amplitude modulated continuous signals into a group of frequency modulated continuous signals and connected to said optical transmitter (8) for intensity modulating said signals at the output of said optical transmitter (8) with the group of frequency modulated continuous signals; and

a frequency demodulator (11) at said second station and connected to said optical receiver (10) and to said demultiplexing means (12) for converting the signals received by said optical receiver (10) into amplitude modulated signals and supplying the latter said signals to said demultiplexing means (12).

**Revendications**

1. Système de transmission multiplex comprenant :

une pluralité de sources (1) de signaux analogiques raccordées à des moyens de multiplexage (2 à 6) pour produire au moins un groupe de signaux continus modulés en amplitude, à des fréquences différentes;

un émetteur optique (8) pour produire un signal de sortie optique modulé en intensité en réponse à des signaux qui lui sont appliqués;

un câble à fibres optiques (9) raccordé par une extrémité audit émetteur optique (8) pour transmettre les signaux optiques présents à la sortie dudit émetteur optique (8); et

un récepteur optique (10) raccordé audit câble à fibres optiques (9) pour recevoir des signaux optiques à partir dudit émetteur optique (8);

le système étant caractérisé par :

un modulateur de fréquence (7) raccordé auxdits moyens de multiplexage (2 à 6) pour convertir ledit groupe de signaux continus modulés en amplitude en un groupe de signaux continus modulés en fréquence, avant l'envoi des signaux à l'émetteur optique (8) pour produire la modulation de l'intensité dudit signal de sortie optique; et

un démodulateur de fréquence (11) raccordé audit récepteur optique (10) pour démoduler les signaux présents à la sortie dudit récepteur optique (10).

2. Système selon la revendication 1, dans lequel lesdits moyens de multiplexage (2 à 6) comprennent une pluralité de multiplexeurs (2,3), chacun de ladite pluralité de multiplexeurs (2,3) étant raccordé à une pluralité de source (1) de signaux analogiques, et dans lequel la pluralité de multiplexeurs (2,3) est raccordée à d'autres moyens de multiplexage (6) et dans lequel ledit modulateur de fréquence (7) est raccordé auxdits autres moyens de multiplexage (6).

3. Système selon la revendication 1 ou 2, comprenant en outre des moyens de démultiplexage (12) raccordés audit démodulateur de fréquence (11) pour démultiplexer les signaux à la sortie dudit démodulateur de fréquence (11) et transformer les signaux indiqués en dernier en lesdits signaux analogiques.

4. Système selon la revendication 1, 2 ou 3, comprenant en outre un dispositif de préaccentuation (55) raccordant ledit modulateur de fréquence (7) auxdits moyens de multiplexage (2 à 6) pour accentuer certains desdits signaux modulés en amplitude par rapport à d'autres desdits signaux modulés en amplitude, et un dispositif de désaccentuation (56) raccordé à la sortie dudit modulateur de fréquence (11) pour désaccentuer les signaux accentués faisant partie desdits signaux modulés en amplitude.

5. Système selon la revendication 1, comprenant en outre :

une autre pluralité de sources de signaux analogiques raccordées à d'autres moyens de multiplexage pour former un autre groupe de signaux continus modulés en amplitude à des fréquences différentes;

un autre modulateur de fréquence (7a) situé à l'emplacement dudit récepteur optique (10) et raccordé auxdits autres moyens de multiplexage pour convertir ledit autre groupe de signaux continus modulés en amplitude en un autre groupe de signaux continus modulés en fréquence,

un autre émetteur optique (8a) disposé à l'emplacement dudit autre modulateur de fréquence (7a) et raccordé audit autre modulation de fréquence pour moduler l'intensité dudit signal optique de sortie dudit autre émetteur optique par ledit autre groupe de signaux continus modulés en fréquence,

ledit câble à fibres optiques (9) étant raccordé, par une extrémité, audit autre émetteur optique (8a) pour transmettre les signaux optiques délivrés à la sortie dudit autre émetteur optique;

un autre récepteur optique (10a) disposé à l'emplacement dudit émetteur optique (8) mentionné en premier et raccordé audit câble à fibres optiques (9) pour recevoir des signaux optiques en provenance dudit autre émetteur optique (8a); et

un autre démodulateur de fréquence (11a) raccordé audit autre récepteur optique (10a) pour démoduler les signaux présents à la sortie dudit autre récepteur optique.

6. Système selon la revendication 5, comprenant en outre des moyens générateurs (54a) pour produire une porteuse modulée par une tonalité pilote, des moyens raccordant lesdits moyens générateurs (54a) audit autre émetteur optique (8a) pour moduler le signal optique de sortie dudit autre émetteur optique (8a) par ladite porteuse, des moyens de détection (35) raccordés audit autre récepteur optique (10a) pour indiquer la présence et l'absence, dans ledit autre récepteur optique (10a), de ladite porteuse modulée par une tonalité pilote, et contrôler les moyens de délivrance d'un signal de contrôle, qui répondent auxdits moyens de détection (35) pour délivrer un signal de contrôle et qui sont raccordés audit émetteur optique (8) mentionné en premier, pour moduler le signal de sortie dudit émetteur optique (8) mentionné en premier, par ledit signal de contrôle.

7. Système selon la revendication 6, comprenant des capteurs de mesure de conditions, disposés à la place dudit émetteur optique (8) mentionné en premier pour mesurer des conditions audit emplacement mentionné en dernier lieu, et des moyens raccordés auxdits capteurs et audit émetteur optique (8) mentionné en premier pour moduler le signal de sortie dudit émetteur optique (8) mentionné en premier, en fonction des conditions mesurées par lesdits capteurs.

8.  Système de communication dans lequel les signaux analogiques sont transmis d'un premier poste à un second poste par l'intermédiaire d'un câble à fibres optiques (9), ledit premier poste (52) comprenant une pluralité de sources (1) de signaux analogiques, raccordées à des moyens de multiplexage (2 à 6) pour délivrer au moins un groupe de signaux continus modulés en amplitude, à des fréquences différentes, et un émetteur optique (8) raccordé à une première partie dudit câble à fibres optiques (9) pour envoyer les signaux présents à la sortie dudit émetteur optique (8) à ladite première partie dudit câble à fibres optiques (9), et lesdits seconds postes (53) comprenant un récepteur optique (10) raccordé à une autre partie dudit câble à fibres optiques (9) pour recevoir des signaux optiques en provenance dudit émetteur optique (8), et des moyens de démultiplexage (12) pour démultiplexer des signaux reçus par ledit récepteur optique (10), ledit système étant caractérisé en ce qu'il s'agit d'un système téléphonique, dans lequel une pluralité de sources de signaux analogiques comprennent des signaux vocaux et/ou des signaux de tonalité, et qui comprend en outre :

un modulateur de fréquence (7) situé dans ledit premier poste raccordé auxdits moyens de multiplexage (2 à 6) pour convertir ledit groupe de signaux continus modulés en amplitude et un groupe de signaux continus modulés en fréquence et raccordés audit émetteur optique (8) pour moduler l'intensité desdits signaux présents à la sortie dudit émetteur optique (8) avec le groupe de signaux continus modulés en fréquence; et

un démodulateur de fréquence (11) situé dans ledit second poste et raccordé audit émetteur optique (10) et auxdits moyens de démultiplexage (30) pour convertir les signaux reçus par ledit récepteur optique (10) en des signaux modulés en amplitude et envoyer lesdits signaux mentionnés en dernier auxdits moyens de démultiplexage (12).

## Patentansprüche

1.  Multiplex-Übertragungssystem, das

eine Vielzahl von Analogsignalquellen (1), die an eine Multiplexereinrichtung (2 bis 6) angeschlossen sind, welche mindestens eine Gruppe von amplitudenmodulierten ununterbrochenen Signalen mit voneinander verschiedenen Frequenzen abgibt,

einen Lichtsender (8), der im Ansprechen auf daran angelegte Signale ein intensitätsmoduliertes optisches Ausgangssignal erzeugt,

einen an einem Ende mit dem Lichtsender (8) verbundenen Lichtwellenleiter (9) zum Übertragen der optischen Signale am Ausgang des Lichtsenders (8) und

einen an den Lichtwellenleiter (9) angeschlossenen Lichtempfänger (10) zum Aufnehmen der optischen Signale aus dem Lichtsender (8) aufweist,

wobei das System gekennzeichnet ist durch

einen an die Multiplexereinrichtung (2 bis 6) angeschlossenen Frequenzmodulator (7), der vor dem Zuführen der Signale zu dem Lichtsender (8) für die Intensitätsmodulation des optischen Ausgangssignals die Gruppe der amplitudenmodulierten ununterbrochenen Signale in eine Gruppe frequenzmodulierter ununterbrochener Signale umsetzt, und

einen an den Lichtempfänger (10) angeschlossenen Frequenzdemodulator (11) zum Demodulieren der Signale an dem Ausgang des Lichtempfängers (10).

2.  System nach Anspruch 1, bei dem die Multiplexereinrichtung (2 bis 6) eine Vielzahl von Multiplexern (2, 3) aufweist, von denen jeder an eine Vielzahl von Analogsignalquellen (1) angeschlossen ist, wobei die Vielzahl der Multiplexer (2, 3) mit einer weiteren Multiplexereinrichtung (6) verbunden ist und wobei der Frequenzmodulator (7) an die weitere Multiplexereinrichtung (6) angeschlossen ist.

3.  System nach Anspruch 1 oder 2, das ferner eine an den Frequenzdemodulator (11) angeschlossene Demultiplexereinrichtung (12) zum Demultiplexen der Signale an dem Ausgang des Frequenzdemodulators (11) und zum Umsetzen der letzteren Signale in analoge Signale aufweist.

4.  System nach Anspruch 1, 2 oder 3, das ferner einen den Frequenzmodulator (7) mit der Multiplexereinrichtung (2 bis 6) verbindenden Vorverzerrer (55) zum Anheben einiger der amplitudenmodulierten Signale in bezug auf die anderen amplitudenmodulierten Signale und einen an den Ausgang des Frequenzdemodulators (11) angeschlossenen Nachentzerrer (56) zum Entzerren der einigen amplitudenmodulierten Signale aufweist.

5.  System nach Anspruch 1, das ferner

eine weitere Vielzahl von Analogsignalquellen, die mit einer weiteren Multiplexereinrichtung verbunden sind, welche eine weitere Gruppe amplitudenmodulierter ununterbrochener Signale mit voneinander verschiedenen Frequenzen abgibt,

einen an dem Ort des Lichtempfängers (10) angeordneten und an die weitere Multiplexereinrichtung angeschlossenen weiteren Frequenzmodulator (7a) zum Umsetzen der weiteren Gruppe der amplitudenmodulierten ununterbrochenen Signale in eine weitere Gruppe frequenzmodulierter ununterbrochener Signale,

einen weiteren Lichtsender (8a), der an dem Ort des weiteren Frequenzmodulators (7a) angeordnet ist und mit dem weiteren Frequenzmodulator zur Intensitätsmodulation des optischen Ausgangssignals des weiteren Lichtsenders durch die weitere Gruppe frequenzmodulierter ununterbrochener Signale verbunden ist,

wobei der Lichtwellenleiter (9) an einem Ende mit dem weiteren Lichtsender (8a) zum Übertragen der optischen Signale am Ausgang des weiteren Lichtsenders verbunden ist,

einen an dem Ort des erstgenannten Lichtsenders (8) angeordneten und an den Lichtwellenleiter (9) angeschlossenen weiteren Lichtempfänger (10a) zum Aufnehmen der optischen Signale aus dem weiteren Lichtsender (8a) und

einen an den weiteren Lichtempfänger (10a) angeschlossenen weiteren Frequenzdemodulator (11a) zum Demodulieren der Signale an dem Ausgang des weiteren Lichtempfängers aufweist.

6. System nach Anspruch 5, das ferner eine Generatoreinrichtung (54a) zum Erzeugen eines mit einem Pilotton modulierten Trägers, eine die Generatoreinrichtung (54a) mit dem weiteren Lichtsender (8a) verbindende Einrichtung zum Modulieren des optischen Ausgangssignals des weiteren Lichtsenders (8a) mit dem Träger, eine an den weiteren Lichtempfänger (10a) angeschlossene Detektoreinrichtung (35) zum Anzeigen des Vorliegens oder Fehlens des mit dem Pilotton modulierten Trägers an dem weiteren Lichtempfänger (10a) und eine Überwachungssignaleinrichtung aufweist, die auf die Detektoreinrichtung (35) durch Abgabe eines Überwachungssignals anspricht und die mit dem erstgenannten Lichtsender (8) zum Modulieren des Ausgangssignals des erstgenannten Lichtsenders (8) mit dem Überwachungssignal verbunden ist.

7. System nach Anspruch 6, das an dem Ort des erstgenannten Lichtsenders (8) angeordnete Zustandsmeßsensoren zum Messen der Zustände an dem letztgenannten Ort und eine mit den Sensoren und dem erstgenannten Lichtsender (8) verbundene Einrichtung zum Modulieren des Ausgangssignals des erstgenannten Lichtsenders (8) entsprechend den mittels der Sensoren gemessenen Zuständen aufweist.

8. Fernmeldesystem, in welchem analoge Signale von einer ersten Station über einen Lichtwellenleiter (9) zu einer zweiten Station übertragen werden, wobei die erste Station (52) eine Vielzahl von Analogsignalquellen (1), die mit einer Multiplexereinrichtung (2 bis 6) verbunden sind, welche mindestens eine Gruppe von amplitudenmodulierten ununterbrochenen Signalen mit voneinander verschiedenen Frequenzen abgibt, und einen mit einem Teil des Lichtwellenleiters (9) verbundenen Lichtsender (8) zum Zuführen der Signale am Ausgang des Lichtsenders (8) zu dem einen Teil des Lichtwellenleiters (9) aufweist und die zweite Station (53) einen an einen anderen Teil des Lichtwellenleiters (9) angeschlossenen Lichtempfänger (10) zum Aufnehmen optischer Signale aus dem Lichtsender (8) und eine Demultiplexereinrichtung (12) zum Demultiplexen der von dem Lichtempfänger (10) aufgenommenen Signale aufweist, wobei das System dadurch gekennzeichnet ist, daß es ein Fernsprechsystem ist, in welchem die Vielzahl von Analogsignalquellen solche für Sprachsignale und/oder Tonsignale umfaßt und das ferner

an der ersten Station einen Frequenzmodulator (7), der mit der Multiplexereinrichtung (2 bis 6) zum Umsetzen der Gruppe amplitudenmodulierter ununterbrochener Signale in eine Gruppe frequenzmodulierter ununterbrochener Signale verbunden ist und mit dem Lichtsender (8) zur Intensitätsmodulation der Signale an dem Ausgang des Lichtsenders (8) mit der Gruppe frequenzmodulierter ununterbrochener Signale verbunden ist, und

an der zweiten Station einen mit dem Lichtempfänger (10) und der Demultiplexereinrichtung (12) verbundenen Frequenzdemodulator (11) zum Umsetzen der von dem Lichtempfänger (10) aufgenommen Signale in amplitudenmodulierte Signale und zum Zuführen der letzteren Signale zu der Demultiplexereinrichtung (12) aufweist.

# FIG. I.

EP 0 234 730 B1

# FIG. 2.

# FIG. 3.

11

# FIG. 4.

TO MASTER GROUP

DEEMPHASIS — 56a

FM DEMOD. — 11a

TELEMETRY SIGNALS

PILOT GENERATOR — 54a

OPTICAL RECEIVER — 10a

OPTICAL TRANSMITTER

FM MOD — 7a

PRE-EMPHASIS — 55a

FROM MASTER GROUP

LOSS OF PILOT DETECTOR — 35

OPTICAL FIBER CABLE — 9

LASER TEMP
LASER BIAS
SENSORS

OSCIL-LATOR

PILOT GENERATOR — 54

OPTICAL TRANSMITTER — 8

OPTICAL RECEIVER — 10

TO ALARM & TELEMETRY CIRCUITS

F.M. MOD — 7

FM DEMOD. — 11

52

PREEMPHASIS — 55

DEEMPHASIS — 56

53

MASTER GROUP MUX

MASTER GROUP DEMUX

FROM SUPER GROUP

TO SUPER GROUP

EP 0 234 730 B1

# FIG. 5.

EP 0 234 730 B1

13